# FASCICULE DE BREVET EUROPEEN

(11) **EP 2 173 583 B1**
(45) Date de publication et mention de la délivrance du brevet: **25.05.2016**
(21) Numéro de dépôt: 08827753.8
(22) Date de dépôt: 24.07.2008
(51) Int. Cl.: B60Q 1/04, B62D 25/08

(54) **DISPOSITIF DE CONFORMATION D'UNE PEAU DE CARROSSERIE DE VEHICULE AUTOMOBILE**
VORRICHTUNG ZUR ANPASSUNG DER HÜLLE DER KAROSSERIE EINES AUTOMOBILS
DEVICE FOR CONFORMING THE SKIN OF THE BODYWORK OF AN AUTOMOBILE

(30) Priorité: 03.08.2007 FR 0756942
(43) Date de publication de la demande: 14.04.2010
(73) Titulaire: Compagnie Plastic Omnium, 69007 Lyon (FR)
(72) Inventeur: FAYT, Arnold, F-01640 Jujurieux (FR); CHERON, Hugues, F-01800 Meximieux (FR)
(74) Mandataire: Remy, Vincent Noel Paul
(86) Numéro de dépôt international: PCT/FR2008/051396
(87) Numéro de publication internationale: WO 2009/024699

(56) Documents cités:
- EP-A- 1 502 841
- EP-A- 1 772 352
- WO-A-03/006302
- WO-A-2008/101451
- JP-A- 2005 271 758

## Description

La présente invention concerne le domaine technique des peaux de carrosseries en matière plastique de véhicules automobiles, notamment des peaux de carrosserie entourant des blocs optiques.

On connaît, dans l'état de la technique, notamment du document FR 2 885 587, un procédé de conformation d'une peau de pare-chocs en matière plastique de véhicule automobile, cette peau comportant une ouverture destinée à recevoir un bloc optique. Deux renforts sont solidarisés à la peau en bordure de son ouverture. Lors de ce procédé, on se sert du bloc optique comme d'un gabarit pour placer la peau dans sa position définitive sur le véhicule. A cet effet, on applique chaque renfort contre le bloc optique en respectant exactement le positionnement prévu par différents points du bloc optique, lesquels sont matérialisés par des languettes ou des oeillets conformés sur le bloc optique et coopérant avec des moyens complémentaires agencés sur le renfort. La peau de pare-chocs, relativement déformable, accompagne les renforts et se trouve ainsi positionnée au plus près du bloc optique, sans l'aide d'un gabarit externe. Les renforts sont ensuite assemblés au bloc optique par des moyens d'assemblage distincts ou confondus avec les points de positionnement et la peau demeure ainsi dans sa position définitive par rapport au bloc optique.

En dernier lieu et de façon optionnelle, les renforts sont soudés entre eux, ce qui permet à la peau de garder sa position définitive, même dans le cas où l'on doit démonter le bloc optique.

Ce procédé est satisfaisant en ce qu'il permet de conformer la peau exactement selon la forme du bloc optique qu'elle reçoit, c'est-à-dire sans subir d'inévitables dispersions géométriques entre différents exemplaires du bloc optique ou de la peau.

Toutefois, dans ce procédé de l'état de la technique, la peau est déformée élastiquement par le bloc optique et exerce par conséquent sur ce dernier des forces de rappel élastique, en général des forces de traction, aux points où les renforts sont solidarisés au bloc optique.

Or, le bloc optique, rigide dans son ensemble, comprend des parties moins résistantes mécaniquement. Les forces de traction exercées par la peau, par l'intermédiaire des renforts, pourraient donc contribuer à endommager le bloc optique dans ces parties. Par conséquent, les moyens d'assemblage des renforts à la peau ne peuvent pas être ménagés sur ces parties du bloc. optique. Le document EP1772352A1 (Compagnie Plastic Omnium) décrit un dispositif de conformation d'une peau de carrosserie en matière plastique autour d'un bloc optique de véhicule automobile, ainsi que le procédé de conformation de cette même peau autour dudit bloc optique. Le dispositif de conformation d'une peau de carrosserie en matière plastique autour d'un bloc optique de véhicule automobile selon le document EP1772352A1 montre la peau comportant une ouverture destinée à recevoir le bloc optique, ledit dispositif étant tel que :
- il est conformé en U, et comprend un fond et deux branches s'étendant de chaque côté du fond
- le fond comprend des moyens de fixation au bloc optique,
- chaque branche est destinée à être fixée à la peau en bordure.

On connait par ailleurs, du document un support pour positionner une pièce véhicule automobile.

La présente invention a pour but de remédier à cet inconvénient.

A cet effet, la présente invention a pour objet un dispositif de conformation d'une peau de carrosserie en matière plastique autour d'un bloc optique de véhicule automobile, et le procédé de conformation de cette peau autour dudit bloc optique tel que décrit respectivement par les revendications 1 et 11.

Un « bloc optique » renferme l'optique d'un véhicule automobile : il comprend un boîtier d'optique, comportant différents éléments fonctionnels, notamment les feux de croisement, et fermé par un vitrage d'optique, autour duquel l'ouverture de la peau doit être positionnée.

On entend par « ouverture » une lumière ménagée dans la peau de carrosserie et destinée à recevoir le bloc optique. Cette ouverture peut être caractérisée par un contour non fermé.

Les moyens de fixation sont « mis en place » lorsqu'ils sont placés dans la position permettant de fixer le dispositif de conformation au bloc optique.

Dans toute la suite, on appellera « partie mobile » les parties du dispositif mobiles l'une par rapport à l'autre.

La conformation de la peau de carrosserie autour du bloc optique est réalisée en déplaçant l'une au moins des parties mobiles du dispositif de sorte que l'interface de contact de cette partie soit en appui contre le bloc optique. Chaque partie mobile étant fixée à la peau, cette dernière accompagne le déplacement de la partie mobile en se déformant élastiquement. La peau peut être ainsi positionnée au plus près du vitrage d'optique. La peau est ensuite maintenue dans sa configuration déformée par les moyens de fixation réciproque d'une partie mobile à l'autre. Lorsque l'on relâche ces moyens de fixation réciproque, la peau est à nouveau libre de s'écarter du bloc optique.

Ainsi, les forces de rappel élastiques dues à la déformation de la peau sont exercées essentiellement sur les parties mobiles du dispositif de conformation. Le bloc optique est donc peu sollicité mécaniquement par la peau. Le positionnement et l'éventuelle fixation de la peau relativement au bloc optique peut de ce fait être réalisé relativement à toute partie de celui-ci, sans pour autant risquer de l'endommager.

L'invention peut également comprendre l'une des caractéristiques de la liste suivante :
- les moyens de fixation comprennent des moyens de fixation au bloc optique d'une portion du dispositif, disposés de façon à être sensiblement opposés aux moyens de fixation réciproque, le dispositif comprenant de préférence un dégagement apte à accueillir le bloc optique, intercalé entre les moyens de fixation de la portion au bloc optique et les moyens de fixation réciproques. Ainsi, on peut positionner en premier lieu le bloc optique et ladite portion du dispositif l'un par rapport à l'autre puis les figer dans la position souhaitée. Cette portion, destinée à être fixée en bordure de la peau, permet donc de positionner localement et très précisément la fraction de la peau à laquelle elle est fixée avant que le positionnement global à l'aide des parties mobiles soit assuré. Ce positionnement local est réalisé sans déformation notable de la peau.
- chacune des parties mobiles l'une par rapport à l'autre est destinée à être fixée à la peau de façon à suivre essentiellement le contour de l'ouverture au moins sur une partie de sa longueur. Ainsi, chaque partie mobile est apte à déformer continûment la peau le long d'au moins une partie de son contour et permet par conséquent d'assurer un positionnement plus précis de la peau. Cette configuration est particulièrement avantageuse lorsque le contour de l'ouverture de la peau de carrosserie n'est pas fermé et comprend trois côtés.
- les parties mobiles l'une par rapport à l'autre du dispositif sont disposées sur deux pièces distinctes, les moyens de fixation réciproque étant disposées au moins à une extrémité de chaque pièce. La configuration dans laquelle les moyens de fixation réciproque sont ménagés à leurs deux extrémités est particulièrement avantageuse pour les peaux de carrosseries entourant le bloc optique.
- le dispositif comprend en outre des moyens de positionnement relatif du bloc optique et d'au moins une des parties mobiles l'une par rapport à l'autre du dispositif, de sorte que la partie soit mobile uniquement selon une direction donnée relativement au bloc optique, c'est-à-dire présente uniquement un degré de liberté relativement au bloc optique. Ainsi, on peut guider plus facilement cette partie mobile lors de son déplacement et, par conséquent, mieux contrôler la déformation de la peau et obtenir un positionnement optimal de la peau. La peau conservant un degré de liberté, la positionnement d'une partie mobile n'entraîne pas de déformation notable de la peau.

- chacune des parties mobiles l'une par rapport à l'autre du dispositif est mobile relativement au bloc optique, même lorsque les moyens de fixation du bloc optique au dispositif sont mis en place, ce qui permet de positionner encore plus précisément la peau car sa déformation peut être gérée plus localement,
- au moins une partie mobile du dispositif est constituée par un élément structurel du véhicule, comme un support d'optique ou un support d'aile, ce qui permet de diminuer le nombre de pièces et de simplifier l'assemblage des différents éléments entre eux.
- chaque partie mobile comprend des moyens de fixation à la peau de carrosserie, les moyens de fixation à la peau de carrosserie de chacune des parties mobiles étant distincts des moyens de fixation à la peau de carrosserie de l'autre des parties mobiles.
- les moyens de fixation réciproque de chacune des parties mobiles à l'autre des parties mobiles sont distincts des moyens de fixation de cette partie mobile au bloc optique et/ou à la peau de carrosserie.

L'invention a également pour objet un module de véhicule automobile, comprenant :
- un bloc optique,
- une peau de carrosserie comportant une ouverture destinée à recevoir le bloc optique,
- un dispositif de conformation selon l'invention.

Dans un mode de réalisation particulier, le module comprend au moins l'un des éléments de la liste suivante :
- un support de peau de carrosserie,
- un support d'optique,
- un absorbeur destiné à absorber les chocs avec un piéton,
- des moyens d'anti-cloquage de la peau de carrosserie.

De façon avantageuse, au moins une partie, ou portion, du dispositif est d'une seule pièce avec au moins l'un des éléments de la liste ci-dessus, ce qui permet de simplifier l'assemblage du module.

Optionnellement, la peau de carrosserie est une aile du véhicule automobile.

L'invention a également pour objet un procédé de conformation d'une peau de carrosserie autour d'un bloc optique de véhicule automobile, la peau comportant une ouverture destinée à accueillir le bloc optique, le procédé comprenant les étapes suivantes :
- on fixe au préalable au bloc optique un dispositif de conformation comprenant au moins deux parties mobiles l'une par rapport à l'autre,
- on fixe chaque partie mobile du dispositif à une partie de la peau de carrosserie disposée en bordure de l'ouverture de celle-ci,
- on déplace au moins une des parties mobiles du dispositif de sorte qu'une interface de contact de chaque partie mobile soit en appui contre le bloc optique,
- on fixe l'une des parties mobiles à l'autre des parties de façon à maintenir les interfaces de contact en appui contre le bloc optique.

Optionnellement, les différentes étapes de fixation sont effectuées de sorte que si les deux parties cessent d'être fixées l'une à l'autre, le dispositif de conformation étant fixé au bloc optique, au moins une des parties est libre de s'écarter du bloc optique.

La présente invention a également pour objet un dispositif de conformation d'une peau de carrosserie en matière plastique autour d'un bloc optique de véhicule automobile, la peau comportant une ouverture destinée à recevoir le bloc optique, ledit dispositif étant caractérisé en ce que :
- il comprend d'éventuels moyens de fixation au bloc optique, susceptibles d'être mis en place avant, pendant et/ou après la conformation de la peau de carrosserie,
- il comprend au moins deux parties mobiles l'une par rapport à l'autre,
- chaque partie est destinée à être fixée à la peau, en bordure de son ouverture,
- chaque partie comprend des moyens de fixation réciproque à l'autre partie et une interface de contact avec le bloc optique,
- l'interface de contact de l'une au moins des deux parties est agencée de manière à ce que, une fois mis en place tous les éventuels moyens de fixation du dispositif de conformation au bloc optique, l'autre partie soit libre de s'écarter du bloc optique si les deux parties cessent d'être fixées l'une à l'autre par leurs moyens de fixation réciproque.

Un tel dispositif peut également comprendre toutes les caractéristiques définies ci-dessus et appartenir à un module tel que défini ci-dessus.

La présente invention a également pour objet un procédé de conformation d'une peau de carrosserie autour d'un bloc optique, la peau comportant une ouverture destinée à accueillir un bloc optique, caractérisé en ce qu'il utilise un dispositif de conformation selon l'invention et en ce que le procédé comprend :
- au moins une étape préalable de fixation du dispositif au bloc optique,
- une étape de déplacement d'au moins une partie du dispositif de sorte que l'interface de contact de chaque partie soit en appui contre le bloc optique,
- une étape de fixation d'une partie à l'autre partie de façon à maintenir les interfaces de contact en appui contre le bloc optique,

L'invention sera mieux comprise à la lecture de la description qui va suivre, faite en référence aux dessins dans lesquels :
- la figure 1 est une représentation schématique d'un dispositif de conformation selon un mode de réalisation de l'invention,
- la figure 2 est une vue en perspective d'un module de véhicule automobile selon un mode de réalisation particulier de l'invention,
- la figure 3 est une vue en coupe d'un détail d'une partie supérieure du module de la figure 2,
- la figure 4 est une vue en coupe d'un détail d'une partie inférieure du module de la figure 2.

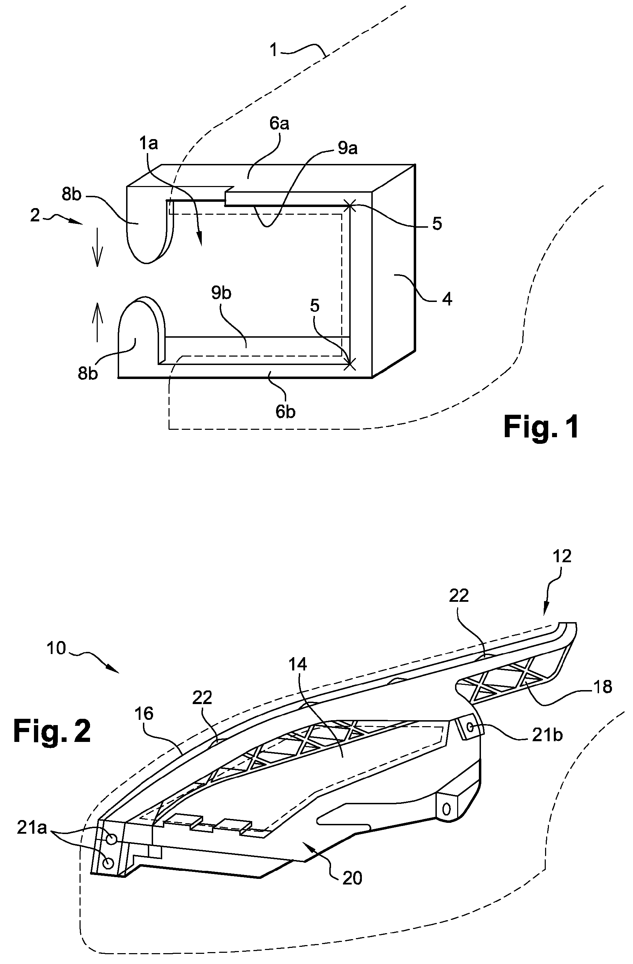

On a représenté sur la figure 1 une aile 1 de véhicule automobile (en pointillés) formée par un panneau de carrosserie moulé. L'aile comporte une ouverture 1a destinée à entourer le vitrage d'optique, non représenté sur la figure.

L'ouverture 1a de l'aile 1 telle que fabriquée correspond essentiellement à la forme du vitrage d'optique. Elle n'est toutefois pas tout à fait de forme complémentaire du vitrage d'optique, du fait de la dispersion des dimensions de l'aile 1 et du vitrage.

La figure 1 montre également un dispositif 2 de conformation de l'aile 1 autour du bloc optique, permettant de déformer élastiquement celle-ci pour qu'elle épouse autant que possible la forme du vitrage d'optique.

Le dispositif de conformation 2 est destiné à être fixé à une face de l'aile, non visible de l'extérieur du véhicule, en bordure de l'ouverture 1a, tout le long de son contour.

Dans la suite de la description, on nommera « partie extérieure », respectivement « partie intérieure » du bloc optique, de l'aile ou de tout autre élément, la partie de cet élément destinée à être le plus à l'extérieur, respectivement le plus à l'intérieur, du véhicule selon sa direction transversale, lorsque cet élément est monté sur le véhicule.

Le dispositif 2 est conformé en U et comprend un fond 4 en partie extérieure et deux branches latérales 6a et 6b s'étendant de chaque côté du fond 4, essentiellement selon la direction transversale du véhicule, vers l'intérieur de celui-ci. Le bloc optique est destiné à être accueilli dans le dégagement délimité par le fond 4 et les deux branches latérales 6a, 6b du dispositif. Le fond 4 est destiné à être immobilisé relativement au bloc optique, notamment en des points 5, et comprend à cet effet des moyens de fixation. Les branches 6a, 6b constituent des parties mobiles du dispositif, ces parties étant mobiles l'une par rapport à l'autre et par rapport au bloc optique. Ces parties mobiles forment des mâchoires permettant le serrage du bloc optique entre elles.

Chaque partie mobile comprend, à son extrémité libre, une patte rigide 8a, 8b. Ces pattes sont destinées à être superposées lorsque la peau est correctement positionnée et comprennent des moyens de fixation réciproque.

Le 2 comprend également, sur chaque partie mobile, une interface de contact 9a, 9b avec le bloc optique destinée à être en appui contre le bloc optique, notamment le vitrage d'optique, et constituée par la face inférieure de la branche 6a et la face supérieure de la branche 6b.

Ainsi, pour conformer l'aile autour du bloc optique, on déplace les branches 6a, 6b l'une par rapport à l'autre. Les deux branches 6a, 6b sont rapprochées de sorte que leurs interfaces de contact 9a, 9b soient en appui contre le bloc optique et que les deux pattes 8a, 8b du dispositif soient superposées.

Ce faisant, on contraint et on déforme élastiquement l'aile 1, en particulier au voisinage de la bordure de l'ouverture 1a fixée au dispositif. Pour maintenir le positionnement correct de l'aile 1, on fixe les deux pattes 8a, 8b entre elles, à l'aide des moyens de fixation réciproque de l'une des pattes à l'autre, constitués par exemple par deux orifices, ménagés chacun dans une patte 8a, 8b et permettant, lorsqu'ils sont superposés, d'accueillir une vis. Au moins l'un des deux orifices est un orifice oblong, permettant l'assemblage des deux pattes en plusieurs positions relatives, selon la déformation à appliquer à l'aile.

L'aile 1 est donc maintenue dans une configuration déformée autour du vitrage d'optique. Toutefois, si l'on relâche les moyens de fixation réciproque des deux branches 6a, 6b, l'aile 1 a tendance à reprendre sa configuration initiale et les branches 6a, 6b s'écartent l'une de l'autre et s'écartent chacune du bloc optique.

On a représenté sur la figure 2 un module d'aile 10 selon un autre mode de réalisation de l'invention. Le module comprend une aile 12, représentée en pointillés, comportant une ouverture 14 destinée à recevoir un bloc optique. Le contour de l'ouverture est complémentaire de celui du vitrage optique. Le bloc optique 15 appartient au module mais n'est pas représenté sur la figure 2 pour des raisons de clarté.

Le module comprend également un support d'aile 16 comportant un absorbeur 18 qui s'étend le long de la bordure supérieure de l'aile 12, dans la direction correspondant à la direction longitudinale du véhicule. L'absorbeur 18 est destiné à absorber un choc avec un piéton. Le module 10 comprend également un support de bloc optique 20 destiné à être placé sous le bloc optique et faisant également office, à l'avant, de renfort anti-cloquage de l'aile 12.

Les supports d'aile 16 et d'optique 20 sont réalisés en matière plastique, ainsi que l'aile 12.

Le support d'aile 16 et le support d'optique 20 forment chacun une partie mobile d'un dispositif de conformation de l'aile. Ils longent respectivement le contour des parties supérieures et inférieures de l'ouverture 14 de l'aile 12 et sont fixés à l'aile en bordure de cette ouverture. Ils sont fixés l'un à l'autre à leurs deux extrémités, aux points 21a et 21b, de façon à former un contour fermé.

On se référera ci-dessous aux figures 2 à 4.

L'aile 12 est fixée le long de son bord supérieur, au support d'aile 16, en des points de fixation 22. Cette fixation est effectuée par vissage ou clippage. Ce type de fixation de l'aile 12 sur le support 16, classique, ne sera pas détaillée davantage.

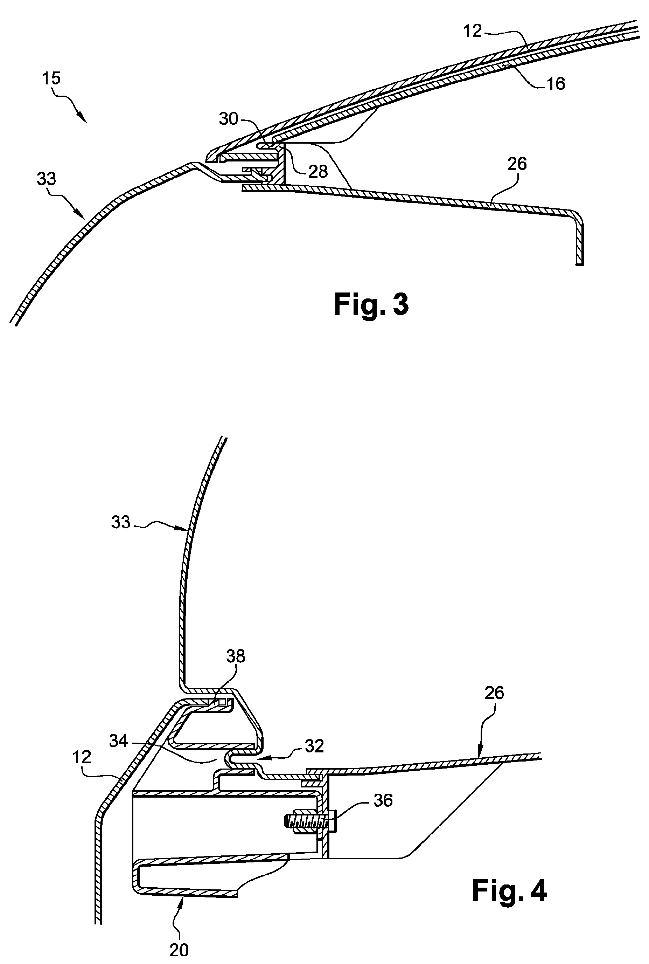

Comme on le voit sur la figure 3, le boîtier d'optique 26 est fixé, au niveau de la bordure supérieure de l'ouverture de l'aile, sur le support d'aile.

Le positionnement relatif du bloc optique 15 et du support d'aile 16 est effectué au plus près de la bordure supérieure de l'ouverture 14 de l'aile 12, à l'aide d'un rebord 28 du boîtier d'optique 26 coopérant avec une rainure 30 du support d'aile 16.

En partie extérieure, la rainure 30 et le rebord 28 sont conformés de sorte que le rebord 28 est immobilisé dans la rainure. En revanche, en partie intérieure, la rainure 30 et le rebord 28 sont conformés de sorte que, dans cette partie, le support d'aile 16 et le bloc optique 15 sont positionnés l'un par rapport à l'autre avec jeu dans une direction correspondant à la direction verticale du véhicule.

Le bloc optique 15 est également fixé dans sa partie arrière supérieure au support d'aile 16. Cette fixation rattrape de préférence le jeu suivant la direction longitudinale du véhicule. Ce type de fixation permet de ne pas perturber le positionnement déjà effectué en partie avant du module 10.

Le bloc optique 15 est fixé au support d'optique 20.

Le positionnement relatif du bloc optique 15 et du support d'optique 20 est effectué par l'intermédiaire de deux pions 32 situés sur le bloc d'optique 15 et coopérant chacun avec un canal 34 ménagé dans le support d'optique 20. Pour un positionnement plus précis, les pions 32 sont ménagés sur le vitrage d'optique 33. En partie intérieure, le canal 34 et le pion 32 coopèrent de façon à effectuer le positionnement relatif du bloc optique 15 et du support d'optique 20 selon une seule direction, correspondant notamment à la direction transversale ou verticale du véhicule, alors que le canal 34 et le pion 32 situés dans la partie extérieure permettent d'effectuer le positionnement relatif du bloc optique 15 et du support d'optique 20 selon les directions correspondant aux directions transversale et verticale du véhicule.

Le boîtier d'optique 26 est fixé au support d'optique 20 par une ou plusieurs vis, de préférence situées au voisinage des pions 32. Ces vis assurent le positionnement relatif du bloc optique 15 et du support d'optique 20 selon une direction correspondant à la direction longitudinale du véhicule.

Le support d'optique 20 est également fixé à l'aile 12 en bordure de l'ouverture 14, à l'aide de clips 38 et, éventuellement, par des points de soudure.

Dans cette configuration, les parties extérieures des support d'aile et d'optique, d'une part, et du bloc optique, d'autre part, sont fixées définitivement les unes par rapport aux autres. En revanche, les parties intérieures des support d'aile 16 et d'optique 20 forment deux parties mobiles l'une par rapport à l'autre, chacune étant également mobiles relativement au bloc optique. Une fois les différents éléments mis en position comme décrit ci-dessus, on déplace alors les parties mobiles des supports d'aile 16 et d'optique 20 l'une par rapport à l'autre. Comme ces supports sont chacun fixés à une partie de l'aile 12, leur déplacement entraîne la déformation élastique de celle-ci.

Ces supports 16, 20 sont déplacés jusqu'à ce que l'ouverture de l'aile soit (autant que possible) complémentaire du bloc optique, c'est-à-dire jusqu'à ce que les parties mobiles des supports d'aile 16 et d'optique 20 comprennent une interface de contact en appui contre le bloc optique 15, au voisinage de leur extrémité intérieure, et enserrent le bloc optique. Ces parties mobiles sont ensuite fixées l'une par rapport à l'autre à leur extrémité intérieure par l'intermédiaire d'au moins deux points de vissage 21a. Cette fixation permet de maintenir la peau en configuration déformée.

Pour effectuer cette fixation, on a ménagé dans chacun des supports d'aile 16 et d'optique 20 des orifices superposés aux points 21a lorsque l'aile et le bloc optique sont correctement positionnés. Ces orifices coopérant avec une vis forment des moyens de fixation réciproque des parties mobiles entre elles. L'un des orifices est un orifice oblong permettant de pouvoir fixer les parties mobiles en plusieurs positions l'une par rapport à l'autre, en fonction de la déformation à appliquer à l'aile 12.

La fixation du support d'optique 16 relativement au support d'optique 20 peut également être sécurisée par vissage des extrémités extérieures des supports d'optique 20 et d'aile 16, au niveau du point 21b.

Ainsi, les supports d'aile et d'optique permettent de déformer l'aile dans la forme voulue sans pour autant exercer de fortes contraintes, dues au rappel élastique de l'aile, sur le bloc optique.

Ensuite, lorsque les différents éléments du module sont assemblés les uns par rapport aux autres, le module est rapporté sur la caisse en blanc du véhicule automobile, par l'intermédiaire du support d'aile, solidarisée par vissage, par sa partie inférieure, notamment sous l'absorbeur 18, à un longeron supérieur de la caisse en blanc.

On notera que l'invention n'est pas limitée au mode de réalisation décrit ci-dessus et illustré sur les figures.

En variante, le dispositif de conformation peut être indépendant des supports d'aile et d'optique. Ce dispositif de conformation peut également être utilisé pour conformer l'aile lorsque cette dernière et le bloc optique sont déjà montés sur le véhicule.

En outre, la forme du dispositif de conformation n'est pas limitée aux formes représentées. On pourrait également envisager un dispositif de conformation comprenant une seule partie mobile relativement au bloc optique.

L'ordre des étapes de fixation des différents éléments les uns par rapport aux autres n'est également pas limité à l'ordre décrit ci-dessus.

Enfin, la peau de carrosserie ne constitue pas nécessairement une peau d'aile mais peut également constituer une peau de pare-chocs, par exemple.

## Revendications

1. Dispositif de conformation (2 ; 16, 20) d'une peau de carrosserie (1 ; 12) en matière plastique autour d'un bloc optique (15) de véhicule automobile, la peau (1 ; 12) comportant une ouverture (1a ;14) destinée à recevoir le bloc optique (15), ledit dispositif étant tel que :
- il est conformé en U, et comprend un fond (4) et deux branches (6a, 6b) s'étendant de chaque côté du fond (4),
- le fond (4) comprend des moyens de fixation (5 ; 30, 34) au bloc optique,
- les deux branches (6a, 6b) constituent deux parties mobiles (6a, 6b ; 16, 20) l'une par rapport à l'autre,
- chaque partie est destinée à être fixée à la peau, en bordure de son ouverture,
- chaque partie comprend des moyens de fixation réciproque 21a à l'autre partie et une interface de contact (9a, 9b) avec le bloc optique,
- l'interface de contact (9a) de l'une au moins des deux parties (6a) est agencée de manière à ce que, tous les moyens de fixation (5) du dispositif de conformation au bloc optique étant mis en place, l'autre partie (6b) soit libre de s'écarter du bloc optique si les deux parties (6a, 6b) cessent d'être fixées l'une à l'autre par leurs moyens de fixation réciproque.

2. Dispositif selon la revendication précédente, dans lequel les moyens de fixation comprennent des moyens de fixation au bloc optique d'une portion du dispositif, disposés de façon à être sensiblement opposés aux moyens de fixation réciproque, le dispositif comprenant de préférence un dégagement apte à accueillir le bloc optique, intercalé entre les moyens de fixation (5) de la portion au bloc optique et les moyens de fixation réciproques (8a, 8b).

3. Dispositif selon l'une quelconque des revendications précédentes, dans lequel chacune des parties (6a, 6b ; 16, 20) mobiles l'une par rapport à l'autre du dispositif est apte à être fixée à la peau (1 ; 12) de façon à suivre essentiellement le contour de l'ouverture sur au moins une partie de sa longueur.

4. Dispositif selon l'une quelconque des revendications précédentes, comprenant des moyens de positionnement relatif (30, 34) du bloc optique et d'au moins une des parties mobiles, de sorte que ladite partie présente uniquement un degré de liberté selon une direction donnée, relativement au bloc optique.

5. Dispositif selon l'une quelconque des revendications précédentes, dans lequel, les moyens de fixation (5 ; 30, 34) du bloc optique au dispositif de conformation étant mis en place, chacune des parties mobiles (6a, 6b; 16, 20) l'une par rapport à l'autre du dispositif est mobile relativement au bloc optique.

6. Dispositif selon l'une quelconque des revendications précédentes, dans lequel au moins une partie mobile du dispositif est constituée par un élément structurel du véhicule, comme un support d'optique (20) ou un support d'aile (16).

7. Dispositif selon l'une quelconque des revendications précédentes, dans lequel chaque partie mobile (6a, 6b; 16, 20) comprend des moyens de fixation (22, 38) à la peau de carrosserie (1 ; 12), les moyens de fixation (22) à la peau de carrosserie de chacune des parties mobiles étant distincts des moyens de fixation (38) à la peau de carrosserie de l'autre des parties mobiles.

8. Dispositif selon l'une quelconque des revendications précédentes, dans lequel les moyens de fixation réciproque (8a, 8b ; 21a, 21b) de chacune des parties mobiles à l'autre des parties mobiles sont distincts des moyens de fixation de cette partie mobile au bloc optique (5 ; 30, 34) et/ou à la peau de carrosserie (22, 38).

9. Module (10) de véhicule automobile, comprenant :
- un bloc optique (15).
- une peau de carrosserie (12) comportant une ouverture (14) destinée à recevoir le bloc optique (15), telle qu'une aile de véhicule,
- un dispositif de conformation (2 ; 16, 20) selon l'une quelconque des revendications précédentes.

10. Module (10) selon la revendication précédente, comprenant au moins l'un des éléments de la liste suivante, au moins l'un des éléments étant de préférence réalisé en une seule pièce avec au moins une portion du dispositif de conformation:
- un support de peau de carrosserie (16),
- un support d'optique (20),
- un absorbeur (18) apte à absorber les chocs avec un piéton,
- des moyens d'anti-cloquage de la peau de carrosserie.

11. Procédé de conformation d'une peau de carrosserie (1 ; 12) autour d'un bloc optique (15) de véhicule automobile, la peau comportant une ouverture (1a, 14) destinée à accueillir le bloc optique, le procédé étant **caractérisé en ce qu'**il comprend les étapes suivantes :
- on utilise un dispositif de conformation (2 ; 16, 20) conformé en U, et comprenant un fond (4) et deux branches (6a, 6b) s'étendant de chaque côté du fond (4) constituant deux parties mobiles l'une par rapport à l'autre,
- on fixe au préalable au bloc optique le fond (4) du dispositif de conformation,
- on fixe chaque partie mobile (6a, 6b ; 16, 20) du dispositif à une partie de la peau de carrosserie (1 ; 12) disposée en bordure de l'ouverture de celle-ci,
- on déplace au moins une des parties mobiles du dispositif de sorte qu'une interface de contact de chaque partie mobile soit en appui contre le bloc optique
- on fixe l'une des parties mobiles à l'autre des parties de façon à maintenir les interfaces de contact en appui contre le bloc optique.

12. Procédé de conformation selon la revendication précédente, dans lequel les différentes étapes de fixation sont effectuées de sorte que si les deux parties (6a, 6b, 16, 20) cessent d'être fixées l'une à l'autre, le dispositif de conformation étant fixé au bloc optique, au moins une des parties (6b ; 16) est libre de s'écarter du bloc optique (15).

## Patentansprüche

1. Vorrichtung zur Formgebung (2; 16, 20) einer Karosseriehaut (1; 12) aus Kunststoff um einen Scheinwerfereinsatz (15) eines Kraftfahrzeugs, wobei die Haut (1; 12) eine Öffnung (1a; 14) aufweist, die zur Aufnahme des Scheinwerfereinsatzes (15) bestimmt ist, wobei die Vorrichtung dergestalt ist, dass:
- sie U-förmig ausgebildet ist und einen Boden (4) und zwei Schenkel (6a, 6b) umfasst, die sich auf jeder Seite des Bodens (4) erstrecken,
- der Boden (4) Einrichtungen zur Befestigung (5; 30, 34) an dem Scheinwerfereinsatz umfasst,
- die zwei Schenkel (6a, 6b) zwei relativ zueinander bewegliche Teile (6a, 6b; 16, 20) bilden,
- jeder Teil zur Befestigung an der Haut bestimmt ist, am Rand von deren Öffnung,
- jeder Teil Einrichtungen zur gegenseitigen Befestigung (21a) an dem anderen Teil und eine Kontaktschnittstelle (9a, 9b) mit dem Scheinwerfereinsatz umfasst,
- die Kontsktschnittstelle (9a) mindestens eines der zwei Teile (6a) so vorgesehen ist, dass, wenn sämtliche Einrichtungen zur Befestigung (5) der Formgebungsvorrichtung an dem Scheinwerfereinsatz eingesetzt sind, der andere Teil (6b) sich drei von dem Scheinwerfereinsatz abspreizt, wenn die zwei Teile (6a, 6b) durch ihre Einrichtungen zur gegenseitigen Befestigung nicht mehr aneinander befestigt sind.

2. Vorrichtung nach dem vorhergehenden Anspruch, wobei die Einrichtungen zur Befestigung Einrichtungen zur Befestigung an dem Scheinwerfereinsatz eines Teils der Vorrichtung umfassen, die so angeordnet sind, dass sie zu den Einrichtungen zur gegenseitigen Befestigung im Wesentlichen entgegengesetzt sind, wobei die Vorrichtung vorzugsweise eine Aussparung umfasst, die zur Aufnahme des Scheinwerfereinsatzes eingereichtet ist, der zwischen den Einrichtungen zur Befestigung (5) des Teils an dem Scheinwerfereinsatz und den Einrichtungen zur gegenseitigen Befestigung (8a, 8b) eingesetzt ist.

3. Vorrichtung nach einem der vorhergehenden Ansprüche, wobei jeder der relativ zueinander beweglichen Teile (6a, 6b; 16, 20) der Vorrichtung eingereichtet ist, um an der Haut (1; 12) so befestigt zu werden, dass er im Wesentlichen der Kontur der Öffnung über mindestens einen Teil ihrer Läge folgt.

4. Vorrichtung nach einem der vorhergehenden Ansprüche, umfassend Einrichtungen zur relativen Positionierung (30, 34) des Scheinwerfereinsatzes und mindestens eines der beweglichen Teile, so dass der Teil nur einen Freiheitsgrad in einer bestimmten Richtung relativ zu dem Scheinwerfereinsatz aufweist.

5. Vorrichtung nach einem der vorhergehenden Ansprüche, wobei, wenn die Einrichtungen zur Befestigung (5; 30, 34) des Scheinwerfereinsatzes an der Formgebungsvorrichtung eingesetzt sind, jeder der relativ zueinander beweglichen Teile (6a, 6b; 16, 20) der Vorrichtung relativ zu dem Scheinwerfereinsatz beweglich ist.

6. Vorrichtung nach einem der vorhergehenden Ansprüche, wobei mindestens ein beweglicher Teil der Vorrichtung von einem Strukturelement des Fahrzeugs gebildet ist, wie ein Optikträger (20) oder ein Kotflügelträger (16).

7. Vorrichtung nach einem der vorhergehenden Ansprüche, wobei jeder bewegliche Teil (6a, 6b; 16, 20) Einrichtungen zur Befestigung (22, 38) an der Karosseriehaut (1; 12) umfasst, wobei die Einrichtungen zur Befestigung (22) jedes der beweglichen Teile an der Karosseriehaut von den Einrichtungen zur Befestigung (38) des anderen der beweglichen Teile an der Karosseriehaut verschieden ist.

8. Vorrichtung nach einem der vorhergehenden Ansprüche, wobei die Einrichtungen zur gegenseitigen Befestigung (8a, 8b; 21a, 21b) jedes der beweglichen Teile an dem anderen der beweglichen Teile von den Einrichtungen zur Befestigung dieses beweglichen Teils an dem Scheinwerfereinsatz (5; 30, 34) und/oder an der Karosseriehaut (22, 38) verschieben sind.

9. Kraftfahrzeug-Modul (10), umfassend:
- einen Scheinwerfereinsatz (15),
- eine Karosseriehaut (12) mit einer Öffnung (14), die zur Aufnahme des Scheinwerfereinsatzes (15) bestimmt ist, wie ein Fahrzeugkotflügel,
- eine Formgebungsvorrichtung (2; 16, 20) nach einem der vorhergehenden Ansprüche.

10. Modul (10) nach dem vorhergehenden Anspruch, umfassend mindestens eines der Elemente der folgenden Liste, wobei mindestens eines der Elemente vorzugsweise einstückig mit mindestens einem Teil der Formgebungsvorrichtung realisiert ist:
- einen Karosseriehautträger (16),
- einen Optikträger (20),
- einen Stoßdämpfer (18), der zur Dämpfung der Stöße mit einem Fußgänger eingerichtet ist,
- Einrichtungen gegen Blasenbildung der Karosseriehaut.

11. Vorfahren zur Formgebung einer Karosseriehaut (1; 12) um einen Scheinwerfereinsatz (15) eines Kraftfahrzeugs, wobei die Haut eine Öffnung (1a, 14) aufweist, die zur Ausnahme des Scheinwerfereinsatzes bestimmt ist, wobei das Verfahren **dadurch gekennzeichnet ist, dass** es die folgenden Schritte umfasst:
- Verwenden einer Formgebungsvorrichtung (2; 16, 20), die U-förmig ausgebildet ist und einen Boden (4) und zwei Schenkel (6a, 6b) umfasst, die sich auf jeder Seite des Bodens (4) erstrecken und zwei relativ zueinander bewegliche Teile bilden,
- vorheriges Befestigen des Bodens (4) der Formgebungsvorrichtung an dem Scheinwerfereinsatz,
- Befestigen jedes beweglichen Teils (6a, 6b; 16, 20) der Vorrichtung an einem Teil der Karosseriehaut (1; 12), der am Rand der Öffnung dieser letzten angeordnet ist,
- Bewegen mindestens eines der beweglichen Teile der Vorrichtung, so dass eine Kontaktschnittstelle jedes beweglichen Teils sich gegen den Scheinwerfereinsatz abstützt,
- Befestigen eines der beweglichen Teile an dem anderen der Teile, so dass die Kontaktschnittstellen in Abstützung gegen den Scheinwerfereinsatz gehalten werden.

12. Formgebungsverfahren nach dem vorergehenden Anspruch, wobei die verschiedenen Schritte zur Befestigung so ausgeführt werden, dass, wenn die zwei Teile (6a, 6b; 16, 20) nicht mehr aneinander befestigt sind, wobei die Formgebungsvorrichtung an dem Scheinwerfereinsatz befestigt ist, mindestens eines der Teile (6b; 16) sich frei von dem Scheinwerfereinsatz (15) abspreizt.

## Claims

1. Device (2; 16, 20) for shaping a plastic bodywork skin (1; 12) around a motor vehicle light unit (15), the skin (1; 12) having an opening (1a; 14) for receiving the light unit (15), said device being such that:
- it is U-shaped and comprises a bottom (4) and two branches (6a, 6b) extending each side of the bottom (4),
- the bottom (4) comprises means (5; 30, 34) for attaching to the light unit,
- the two branches (6a, 6b) form two parts (6a, 6b; 16, 20) movable relative to each other,
- each part is intended to be attached to the skin, along its opening,
- each part comprises reciprocal means (21 a) for attaching to the other part and a contact interface (9a, 9b) with the light unit,
- the contact interface (9a) of at least one of the two parts (6a) is arranged so that with all the means (5) for attaching the shaping device to the light unit in position, the other part (6b) is free to move away from the light unit if the two parts (6a, 6b) are no longer attached to each other by their reciprocal attachment means.

2. Device according to the preceding claim, wherein the attachment means comprise means for attaching at least one portion of the device to the light unit, said means being arranged so that they are substantially opposite the reciprocal attachment means, the device preferably comprising clearance adapted to accommodate the light unit, inserted between the means (5) for attaching the portion to the light unit and the reciprocal attachment means (8a, 8b).

3. Device according to any one of the preceding claim, wherein each of the parts (6a, 6b; 16, 20) movable relative to each other of the device is adapted to be attached to the skin (1; 12) so as to substantially follow the contour of the opening over at least part of its length.

4. Device according to any one of the preceding claims, comprising means (30, 34) for relative positioning of the light unit and of at least one of the movable parts, so that said part has only one degree of freedom in a given direction relative to the light unit.

5. Device according to any one of the preceding claims, wherein, with the means (5; 30, 34) for attaching the light unit to the shaping device in position, each of the parts (6a, 6b; 16, 20) movable relative to each other of the device is movable relative to the light unit.

6. Device according to any one of the preceding claims, wherein at least one movable part of the device consists of a structural element of the vehicle, such as a light support (20) or a wing support (16).

7. Device according to any one of the preceding claims, wherein each movable part (6a, 6b; 16, 20) comprises means (22, 38) for attaching to the bodywork skin (1; 12), the means (22) for attaching to the bodywork skin of each of the movable parts being separate from the means (38) for attaching to the bodywork skin of the other of the movable parts.

8. Device according to any one of the preceding claims, wherein the reciprocal means (8a, 8b; 21 a, 21 b) for attaching each movable part to the other movable part are separate from the means for attaching this movable part to the light unit (5; 30, 34) and/or to the bodywork skin (22, 38).

9. Module (10) of a motor vehicle, comprising:
- a light unit (15).
- a bodywork skin (12) having an opening (14) for receiving the light unit (15), such as a vehicle wing,
- a shaping device (2; 16, 20) according to any one of the preceding claims.

10. Module (10) according to the preceding claim, comprising at least one of the elements on the following list, at least one of the elements preferably being made in one piece with at least a portion of the shaping device:
- a bodywork skin support (16),
- a light support (20),
- an absorber (18) adapted to absorb impacts with a pedestrian,
- means for preventing blistering of the bodywork skin.

11. Method for shaping a bodywork skin (1; 12) around a motor vehicle light unit (15), the skin having an opening (1 a, 14) for receiving the light unit, the method being **characterised in that** it comprises the following steps:
- using a U-shaped shaping device (2; 16, 20) comprising a bottom (4) and two branches (6a, 6b) extending each side of the bottom (4) forming two parts movable relative to each other,
- first attaching the bottom (4) of the shaping device to the light unit,
- attaching each movable part (6a, 6b; 16, 20) of the device to a part of the bodywork skin (1; 12) arranged along the opening thereof,
- moving at least one of the movable parts of the device so that a contact interface of each movable part rests against the light unit,
- attaching one of the movable parts to the other part so as to maintain the contact interfaces pressing against the light unit.

12. Shaping method according to the preceding claim, wherein the various attachment steps are carried out so that if the two parts (6a, 6b; 16, 20) are no longer attached to each other, the shaping device being attached to the light unit, at least one of the parts (6b; 16) is free to move away from the light unit (15).
